# EUROPÄISCHE PATENTSCHRIFT

(11) **EP 4 268 356 B1**
(45) Veröffentlichungstag und Bekanntmachung des Hinweises auf die Patenterteilung: **13.11.2024**
(21) Anmeldenummer: 20838096.4
(22) Anmeldetag: 23.12.2020
(51) Int. Cl.: H02K 11/40, H02K 9/19, H02K 7/00, H02K 13/00, H01R 39/56, H01R 39/38, H01R 39/20

(54) **ABLEITVORRICHTUNG ZUR ABLEITUNG ELEKTRISCHER STRÖME SOWIE MASCHINE MIT EINER DERARTIGEN ABLEITVORRICHTUNG**
COLLECTION DEVICE FOR COLLECTING ELECTRICAL CURRENTS, AND MACHINE COMPRISING A COLLECTION DEVICE OF THIS KIND
DISPOSITIF DE COLLECTE POUR COLLECTER DES COURANTS ÉLECTRIQUES ET MACHINE COMPRENANT UN TEL DISPOSITIF DE COLLECTE

(43) Veröffentlichungstag der Anmeldung: 01.11.2023
(73) Patentinhaber: Schunk Carbon Technology GmbH, 4822 Bad Goisern (AT)
(72) Erfinder: MATTHEY, Stephen, 5342 Abersee (AT); ETZLSTORFER, Marco, 4822 Bad Goisern (AT); KURZ, Joachim, 4822 Bad Goisern (AT); HUBER, Florian, 4820 Bad Ischl (AT); WEBER, Markus, 4822 Bad Goisern (AT); KAIN, Ludwig, 4822 Bad Goisern (AT)
(74) Vertreter: advotec.
(86) Internationale Anmeldenummer: PCT/EP2020/087799
(87) Internationale Veröffentlichungsnummer: WO 2022/135715

(56) Entgegenhaltungen:
- EP-A1- 1 300 927
- SU-A1- 391 670
- US-A- 2 548 631
- US-A- 2 821 664
- US-A- 4 006 953
- US-A- 5 661 356
- US-A1- 2007 201 995

## Beschreibung

Die vorliegende Erfindung betrifft eine **Maschine in Form eines elektrischen Antriebsmotors oder Getriebes mit einer** Ableitvorrichtung zur Ableitung elektrischer Ströme aus einem mit einer Welle ausgebildeten Rotorteil der Maschine, umfassend ein mindestens teilweise in einer Führungseinrichtung aufgenommenes, insbesondere axial verschiebbares Kontaktelement zur Ausbildung eines elektrisch leitenden Schleifkontaktes zwischen einer zur Ausbildung des Schleifkontaktes vorgesehenen Schleifkontaktfläche des Kontaktelements und einer Wellenkontaktfläche der Welle, wobei das Kontaktelement mit der Führungseinrichtung und/oder einem Halteelement der Maschine elektrisch leitend verbunden ist und wobei das Kontaktelement mittels eines Federelements in Richtung der Wellenkontaktfläche vorgespannt ist.

Derartige Ableitvorrichtungen in Maschinen sind in unterschiedlichen Ausführungsformen aus dem Stand der Technik bekannt. Insbesondere ist es bekannt, zur Ableitung niederfrequente Ströme Kohlebürsten einzusetzen, die in axialer oder radialer Verteilung um eine Welle angeordnet und über Anschlusslitzen mit einem Stator kontaktiert sind. Die dabei in einer Halteeinrichtung bzw. einem Bürstenhalter aufgenommenen Kohlebürsten ermöglichen aufgrund ihres geringen elektrischen Widerstands eine direkte Ableitung elektrischer Ströme und können somit eine unerwünschte Stromführung über Lagerstellen der Welle vermeiden, die aufgrund punktueller Verschweißung zu Oberflächenschäden der Lagerkörper oder Lagerringe führen könnte.

Der Begriff "Welle" wird vorliegend als ein Synonym für den Begriff "Rotorteil" oder "Achse" verwendet. Daher sind unter den Begriffen "Welle" alle drehenden Maschinenteile zu verstehen, für die eine Ableitung von Strömen in ein feststehendes Statorteil bzw. Maschinenteil einer Maschine erfolgen kann.

Ableitvorrichtungen werden auch regelmäßig in der Bahntechnik eingesetzt, wo Wechselströme oder auch ein Arbeitsstrom über Radachsen abfließen kann. Derartige Ableitvorrichtungen sind beispielsweise in DE 10 2010 039 847 A1 beschrieben.

EP 1 300 927 A1 offenbart eine Ableitvorrichtung zur Ableitung elektrischer Ströme.

US 5 661 356 A offenbart eine Ableitvorrichtung, welche ähnlich der oben genannten, aus dem Stand der Technik bekannten Ableitvorrichtung konstruiert ist.

US 4 006 953 A und US 2 821 664 A offenbaren das Kühlen von Stromkollektoren bzw. Strombürsten durch eine Ölbenetzung.

Auch bei elektrischen Maschinen im Allgemeinen, beispielsweise für Kraftfahrzeuge, sind Maßnahmen zur Ableitung von Strömen erforderlich. Bei Motorantriebswellen oder daran angeschlossenen Getriebewellen bzw. anderen funktionalen Komponenten können kontinuierlich schwankende Wechselspannungen bzw. Ströme und hochfrequente Strompulse auftreten, die auch Lagerstellen einer Rotorwelle oder Getriebewelle schädigen können, weshalb hier regelmäßig Ableitvorrichtungen erforderlich sind.

Ein Problem bei den beschriebenen Ableitvorrichtungen und den solche Ableitvorrichtungen aufweisenden Maschinen besteht in der hohen Wärmeentwicklung bedingt durch elektrische und mechanische Verluste, die zu hohen thermischen Belastungen sowohl der Ableitvorrichtung als auch der Maschine (z. B: Motor, Getriebe) führt. Um dieses Problem einigermaßen in den Griff zu bekommen, wurde bislang insbesondere über Lüftungseinrichtungen ein Abtransport der entstehenden Wärme bewerkstelligt. Allerdings kann über derartige Lüftungseinrichtungen nur teilweise eine Minimierung der thermischen Bauteilbelastung erreicht werden. Ein weiterer Nachteil derartiger Lüftungseinrichtungen besteht in der drastischen Erhöhung der Bauraumgröße, welche nötig ist, um derartige Lüftungseinrichtungen in die betreffenden Maschinen zu integrieren.

Der vorliegenden Erfindung liegt die Aufgabe zugrunde, die oben geschilderten Nachteile aus dem Stand der Technik zu überwinden. Der Erfindung liegt insbesondere die Aufgabe zugrunde, eine thermische Bauteilbelastung bei einer Ableitung von parasitären Strömen zu minimieren und gleichzeitig den benötigten Bauraum möglichst klein zu halten.

Diese Aufgabe wird erfindungsgemäß durch eine als elektrischer Antriebsmotor oder Getriebe ausgebildete Maschine mit den Merkmalen des Anspruchs 1 gelöst.

Mit der erfindungsgemäßen Maschine ist es in idealer Weise möglich, kapazitiv eingekoppelte hochfrequente Spannungen (sogenannte parasitäre Wechselspannungen), die von elektrischen Antrieben aufgrund der verwendeten Leistungselektronik (Pulsweitenmodulation) gebildet werden, abzuleiten und gleichzeitig die hierbei entstehende Wärme mit Hilfe des ölartigen Fluids einzudämmen bzw. abzuführen. Insbesondere ist bei der vorliegenden Erfindung keine spezielle Kühlungsvorrichtung, wie beispielsweise eine Lüftungseinrichtung zur Minimierung der thermischen Belastung nötig. Dadurch kann die Konstruktion eines Elektromotors oder Getriebes einfacher und damit günstiger und die Kühlung des Motors oder Getriebes effizienter gestaltet werden als bei den bislang bekannten Systemen. Zum Beispiel entfallen auch Reibungsverluste u. a. durch Radialwellendichtringe. Zudem kann - wie bereits oben ausgeführt - die gesamte Maschinendimensionierung kleiner ausfallen (Trägheitsmoment der rotierenden Teile wird geringer).

In aller Regel ist das ölige Fluid ein Motor und/oder Getriebeöl, welches meist ohnehin in dem Motor oder Getriebe, in welchem die Ableitvorrichtung vorgesehen ist, vorhanden ist.

Bei einer besonders bevorzugten Ausführungsform der erfindungsgemäßen Maschine ist die Führungseinrichtung mit einem Statorteil der Maschine elektrisch leitend verbindbar. Dieses Statorteil der Maschine kann beispielsweise als Halteeinrichtung für die Ableitvorrichtung dienen. Beim Ableiten des Stromes wird dieser von der betreffenden Welle in das Kontaktelement und die Führungseinrichtung der Ableitvorrichtung abgeleitet. Dann fließt der abgeleitete Strom bei der beschriebenen Ausführungsform in das genannte Statorteil der Maschine.

Mit Vorteil ist das Kontaktelement mit der Führungseinrichtung mittels einer, vorzugsweise niederohmigen Litze elektrisch leitend verbunden, wobei die Litze an einem Ende vorzugsweise in das Kontaktelement eingepresst oder eingestampft ist und am anderen Ende mit der Führungseinrichtung vorzugsweise verschweißt oder verlötet oder gecrimpt ist. Die Führungseinrichtung ist vorzugsweise mindestens teilweise aus einem niederohmigen Material, insbesondere aus Metall, vorzugsweise Aluminium, Aluminiumlegierung, Kupfer und/oder Messing gefertigt. Bei einer besonders bevorzugten Ausführungsform der erfindungsgemäßen Maschine ist das Kontaktelement im Wesentlichen aus einer Kohlenstoff-Metall-Mischung, insbesondere aus einer Mischung aus Grafit und einem elektrisch gut leitenden Metall gefertigt, wobei zumindest im Bereich der Schleifkontaktfläche des Kontaktelements vorzugsweise Silber als Metall vorgesehen ist und wobei in einem hinteren Bereich des Kontaktelements vorzugsweise Kupfer als Metall vorgesehen ist, wobei das Kontaktelement im Bereich der Schleifkontaktfläche vorzugsweise frei von Kupfer ist. Der Anteil des Metalls im Kontaktelement beträgt vorzugsweise mindestens 30 Vol.-%. Im Bereich der Schleifkontaktfläche ist das Kontaktelement deshalb vorzugsweise frei von Kupfer, da dieses Metall in Verbindung mit dem Stromdurchgang zu katalytischen Veränderungen des ölartigen Fluids führen kann, was in Konsequenz die physikalischen Eigenschaften dieses Fluids negativ verändern kann. Aus diesem Grunde ist auch die Welle der weiter unten näher beschriebenen erfindungsgemäßen Maschine ebenfalls zumindest in dem Bereich, an welchem die Welle das Kontaktelement kontaktiert, frei von Kupfer.

Um einen Systemwiderstand unter allen Betriebszuständen möglichst niedrig zu halten, sollte auch der Widerstand der Ableitvorrichtung niedrig gewählt sein. Durch die oben beschriebenen Ausführungsformen mit niederohmigen Materialien und einem Kontaktelement aus einer Metall-Kohlenstoff-Mischung kann der Widerstand der gesamten Vorrichtung niedrig gehalten werden. Andererseits wird der Systemwiderstand maßgeblich durch den Spannungsabfall zwischen der Wellenoberfläche und der Schleifkontaktfläche des Kontaktelements beeinflusst. Dieser nimmt den größten Anteil im Gesamtsystem ein. Daher sollte dieser ebenfalls gering gehalten werden. Um dies unter der kontinuierlichen Beölung zu gewährleisten, ist einerseits eine hohe spezifische Anpressung des Kontaktelements an die Welle vorteilhaft. Dieser Wert sollte mindestens 10 N/cm² gewählt werden. Andererseits sollte es an dem Kontaktelement im Bereich der Schleifkontaktfläche zu keinen elektrochemischen Reaktionen in Verbindung mit dem ölartigen Fluid kommen. Dies wird besonders durch einen Silber-Grafit-Werkstoff in einem über die gesamte Lebensdauer verschleißenden Bereich des Kontaktelements gewährleistet.

Mit Vorteil weist das Kontaktelement im Bereich der Schleifkontaktfläche eine Ausnehmung, insbesondere eine Bohrung oder einen Schlitz auf. Dadurch kann ein Aufschwimmen des Kontaktes am Ölfilm unterbunden werden. Mit Vorteil ist das Kontaktelement im Bereich der Schleifkontaktfläche offenporig ausgebildet. Dies trägt zur Unterdrückung von elektrischen Kontaktverlusten zwischen der Welle und dem Kontaktelement bei und minimiert ein Aufschwimmen des Kontaktelements am Ölfilm.

In der Regel ist das Kontaktelement eine stift- oder bolzenförmig ausgebildete Bürste. Die genannte Bürste wird in der Regel durch Formpressen und anschließender thermischer Behandlung gefertigt.

Mit Vorteil ist das Federelement eine Schraubendruckfeder, welche mit einem Ende vorzugsweise an der der Schleifkontaktfläche gegenüberliegenden Stirnseite des Kontaktelements anliegt. Mit einer derartigen Schraubendruckfeder ist es auf einfache Art und Weise möglich, das Kontaktelement stets mit einem bestimmten gewünschten Anpressdruck an die Welle anzudrücken.

Bei der erfindungsgemäßen Maschine kann die Ableitvorrichtung komplett im ölartigen Fluid, insbesondere Motor- oder Getriebeöl gelagert sein. Vorzugsweise ist das ölartige Fluid insbesondere in einem Raum zwischen der Welle und der Führungseinrichtung, welcher durch das Kontaktelement überbrückt wird, vorgesehen. Bei dieser Ausführungsform wird insbesondere der Ort der größten Wärmeentwicklung, nämlich der Bereich zwischen der Welle und dem Kontaktelement durch das ölartige Fluid gekühlt.

Die Ableitvorrichtung ist mindestens teilweise in einer Fluidführung des ölartigen Fluids, insbesondere Ölführung angeordnet, wobei das ölartige Fluid zunächst in den Raum zwischen der Welle und der Führungseinrichtung strömt und dann über die Welle wieder abgeführt wird. So kann die im Kontaktbereich zwischen der Welle und dem Kontaktelement entstehende Wärme durch den Strom des ölartigen Fluids in der Fluidführung sofort abtransportiert werden.

Des Weiteren ist es denkbar, dass das ölartige Fluid auf die Ableitvorrichtung, insbesondere das Kontaktelement der Ableitvorrichtung aufgespritzt, aufgeträufelt oder in Form eines Nebels appliziert wird.

Bei einer weiteren Ausführungsform der erfindungsgemäßen Maschine bzw. der erfindungsgemäßen Ableitvorrichtung ist in der Führungseinrichtung der Ableitvorrichtung eine Leitung für das ölartige Fluid vorgesehen, welche vorzugsweise in den Raum zwischen der Welle und der Führungseinrichtung mündet.

Mit Vorteil wird das Kontaktelement durch das Federelement stets mit einer Kraft von mindestens 10 N/cm² an die Welle gedrückt. Dadurch wird eine Minimierung des Spannungsabfalls zwischen der Wellenoberfläche und der Schleifkontaktfläche des Kontaktelements erzielt.

Wie bereits oben ausgeführt ist die Welle zumindest in dem Bereich, in welchem diese vom Kontaktelement kontaktiert wird, vorzugsweise im Wesentlichen frei von Kupfer.

Das Kontaktelement kontaktiert eine Stirnfläche der Welle, wobei das Kontaktelement im Wesentlichen koaxial zur Welle angeordnet ist. Eine derartige Wellenerdung ist vorteilhaft, da der Planschlag der rotierenden Welle meist gering ist. Durch die Positionierung des Kontaktelements nahe dem Rotationspunkt der Welle werden die Umfangsgeschwindigkeiten minimiert und dadurch auch die über die Lebensdauer des Kontaktelements tatsächlich gesehene Laufstrecke enorm reduziert. Davon direkt beeinflusst ist der Verschleiß des Kontaktelements, der meist proportional mit der Laufstrecke korreliert. Durch die Minimierung der Laufstrecke bleibt der Verschleiß des Kontaktelements gering, wodurch in Folge der Kraftverlust des Federelements über die Gesamtverschleißlänge des Kontaktelements ebenfalls nur minimal ausfällt. Dies ermöglicht beispielsweise den Einsatz einer bereits oben genannten, kostengünstigen Schraubendruckfeder. Außerdem verringert die niedrige Umfangsgeschwindigkeit nahe der Rotationsachse der Welle die Gefahr der Bildung eines durchgehenden, elektrisch isolierenden Schmierfilms, wodurch die Anpresskraft niedriger gehalten werden kann, als dies bei hohen Umfangsgeschwindigkeit erforderlich wäre. Ein weiterer Vorteil der stirnseitigen Kontaktierung der Welle nahe der Rotationsachse ist die Minimierung des Reibmoments durch den geringen radialen Abstand vom Rotationspunkt. Selbst bei einer sehr großen Reibkraft bleibt das Reibmoment als Produkt von Reibkraft x Laufradius klein. In weiterer Folge bleiben daher auch in Verbindung mit der Winkelgeschwindigkeit (äquivalent zu Drehzahl) die Reibleistungen niedrig und so die Systemverluste klein.

In der Regel ist die Ableitvorrichtung in einem Abschnitt der Maschine positioniert, in dem primär eine Betriebstemperatur von über 50 °C vorherrscht.

Weitere Merkmale der Erfindung ergeben sich aus den nachfolgenden Figurenbeschreibungen in Verbindung mit den Zeichnungen und den Unteransprüchen. Hierbei können die einzelnen Merkmale alleine oder in Kombination miteinander verwirklicht sein.

In den Zeichnungen zeigen:
- **Fig. 1:**: einen Ausschnitt aus einer erfindungsgemäßen Maschine im Kontaktbereich zwischen Kontaktelement und Welle im Längsschnitt, wobei das Kontaktelement koaxial zur Welle angeordnet ist;
- **Fig. 2 (nicht zur Erfindung gehörend):**: einen Ausschnitt aus einer weiteren Ausführungsform einer erfindungsgemäßen Maschine im Kontaktbereich zwischen Kontaktelement und Welle im Längsschnitt, wobei das Kontaktelement radial zur Welle angeordnet ist;
- **Fig. 3:**: eine Ausführungsform einer erfindungsgemäßen Ableitvorrichtung;
- **Fig. 4:**: einen Längsschnitt durch die Ableitvorrichtung von **Fig. 3****.**

Nachfolgend werden gleiche oder funktionsgleiche Elemente mit den selben Bezugszeichen gekennzeichnet.

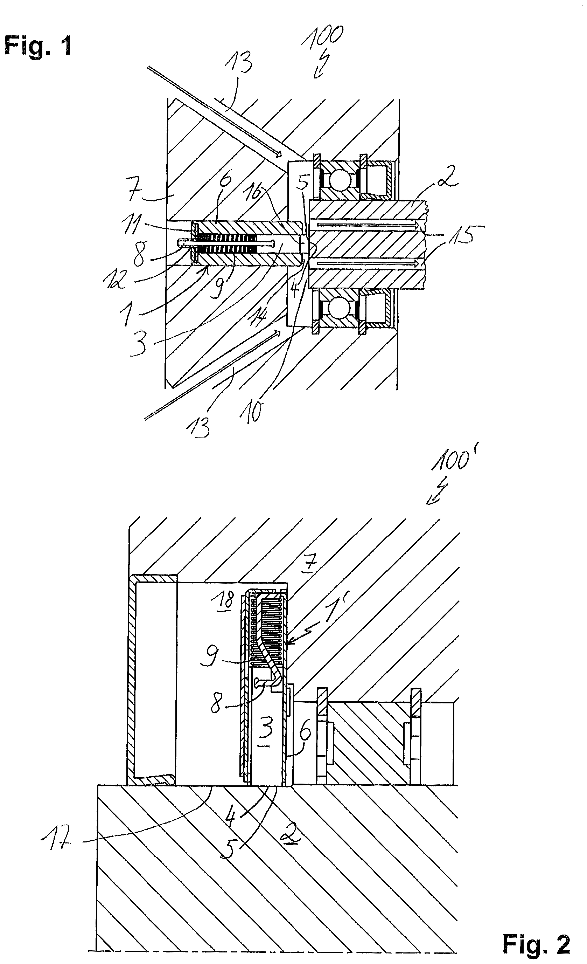

**Fig. 1** zeigt einen Ausschnitt aus einer erfindungsgemäßen Maschine 100 im Längsschnitt. Bei der Maschine 100 handelt es sich vorliegend um einen Elektromotor, welcher ein Rotorteil mit einer Welle 2 aufweist. An einer Stirnseite 10 der Welle 2 ist eine Ableitvorrichtung 1 zur Ableitung elektrischer Ströme angeordnet. Die Ableitvorrichtung umfasst ein Kontaktelement in Form einer Kohlenstoffbürste 3 zur Ausbildung eines elektrisch leitenden Schleifkontaktes zwischen der zur Ausbildung des Schleifkontaktes vorgesehenen Schleifkontaktfläche 4 der Kohlenstoffbürste 3 und einer Wellenkontaktfläche 5 der Welle 2. Die Kohlenstoffbürste 3 ist in einer Führungseinrichtung 6 axial verschiebbar aufgenommen. Die Führungseinrichtung 6 ist als zylinderförmiges Gehäuse ausgebildet und befindet sich in einer ebenfalls zylinderförmig ausgebildeten Ausnehmung in einem Halteelement 7 der Maschine 100. Die Kohlestoffbürste 3 ist mit dem Halteelement 7 mittels einer Litze 8 elektrisch verleitend verbunden.

Die Kohlenstoffbürste 3 ist mittels einer Schraubendruckfeder 9 in Richtung der Wellenkontaktfläche 5 vorgespannt. Somit ist die Kohlenstoffbürste 3 zur Ausbildung eines elektrisch leitenden Schleifkontaktes zwischen der zur Ausbildung des Schleifkontaktes vorgesehenen Schleifkontaktfläche 4 der Kohlenstoffbürste 3 und der axialen Wellenkontaktfläche 5 der Welle 2 durch die Feder 9 mit einer Kontaktkraft beaufschlagt. An dem der Welle 2 zugewandten Seite der Führungseinrichtung 6 ragt die Kohlenstoffbürste 3 ein Stück weit aus dieser heraus und kontaktiert die Welle 2 an ihrer Stirnseite 10. Dabei ist die Kohlenstoffbürste 3 im Wesentlichen mittig zur Stirnseite 10 der Welle 2 und somit koaxial zur Welle angeordnet. Wie bereits oben beschrieben ist diese Stellung besonders vorteilhaft, da dadurch ein möglichst geringer Verschleiß der Kohlenstoffbürste 3 erreicht wird.

Am anderen Ende der Führungseinrichtung 6 weist diese einen Deckel 11 auf, der eine mittige Aussparung 12 aufweist, welche von der Litze 8 durchgriffen wird. Zwischen dem Deckel 11 und der Kohlenstoffbürste 3 ist die Feder 9 angeordnet, welche die Kohlenstoffbürste 3 in Richtung der Welle 2 vorspannt.

Im Halteelement 7 der Maschine 100 sind zwei Ölleitungskanäle 13 vorgesehen. Diese Ölleitungskanäle 13 sind oberhalb bzw. unterhalb der Welle 2 angeordnet und verlaufen zunächst schräg auf diese zu. Entsprechend der in **Fig. 1** dargestellten Pfeile strömt Motoröl in Richtung der Welle 2 und gelangt von den Ölleitungskanälen 13 in den Raum 14 zwischen der Welle 2 und der Führungseinrichtung 6, welche vom vorderen Endbereich 16 der Kohlenstoffbürste 3 überbrückt wird. Dadurch kommt es zu einer Benetzung der Kohlenstoffbürste 3 mit Öl in diesem Bereich. Hierbei gelangt auch Öl auf die Schleifkontaktfläche 4 bzw. die Wellenkontaktfläche 5. Durch dieses "Beölen" der Kohlenstoffbürste 3 und der Welle 2 wird eine optimale Kühlung in diesem Bereich erreicht. Von dem Raum 14 strömt das erwärmte Öl weiter in zwei in der Welle 2 angeordnete Kanäle 15, welche parallel zur Längsachse der Welle angeordnet sind. Dadurch wird die Wärme quasi von der Kohlenstoffbürste 3 durch die Kanäle 15 abtransportiert.

Es versteht sich, dass die Benetzung der Kohlenstoffbürste 3 auch anderweitig bewerkstelligt werden könnte. So ist es beispielsweise möglich, dass die Kohlenstoffbürste gerade im Kontaktbereich zur Welle mit Öl beträufelt oder mit Öldampf beaufschlagt wird. Auch ist es denkbar, dass die komplette Maschine, insbesondere im Kontaktbereich zwischen der Welle 2 und der Kohlenstoffbürste 3 sich komplett in Öl befindet.

Die Führungseinrichtung 6 wie auch das Halteelement 7 sind aus einem elektrisch leitenden Metall gefertigt, sodass zwischen der Führungseinrichtung 6 und der Halteeinrichtung 7 eine elektrisch leitende Verbindung besteht. Im vorliegenden Ausführungsbeispiel besteht die Führungseinrichtung 6 aus Aluminium.

Die Litze 8 ist ebenfalls aus einem niederohmigen Material gefertigt. Die Litze 8 ist an einem Ende in die Kohlenstoffbürste 3 eingepresst und an ihrem anderen Ende durch Crimpen mit dem Halteelement 7 verbunden.

Die Kohlenstoffbürste 3 weist einen zweischichtigen Aufbau auf. Im Bereich der Schleifkontaktfläche 4 besteht die Kohlenstoffbürste 3 aus einer Grafit-Silber-Mischung. Hiervon betroffen ist insbesondere der den Raum 14 überbrückende Abschnitt 16 der Kohlenstoffbürste 3. Der Silberanteil beträgt in diesem Bereich ca. 3 Vol.-%. Der übrige Bereich der Kohlenstoffbürste 3 besteht aus einer Grafit-Kupfer-Mischung. Der Abschnitt 16 der Kohlenstoffbürste 3 sowie die Welle 2 sind jedoch im Wesentlichen frei von Kupfer, um unerwünschte Reaktionen mit dem Öl zu vermeiden.

Die Kohlenstoffbürste 3 ist als zylinderförmiger Stift ausgebildet. Im vorliegenden Ausführungsbeispiel wird die Kohlenstoffbürste 3 mit einer Kraft von ca. 10 N/cm² an die Welle 2 gedrückt.

**Fig. 2** zeigt einen Längsschnitt durch eine nicht zur Erfindung gehörenden Ausführungsform einer elektrischen Maschine 100'. Der Hauptunterschied zur Maschine 100 der Fig. 1 besteht darin, dass hier die Ableitvorrichtung 1' radial zur Welle 2 angeordnet ist, sodass die Kohlenstoffbürste 3 die Mantelfläche 17 der Welle 2 kontaktiert. Zudem ist hier die Litze 8 mit der Führungseinrichtung 6 verbunden, sodass die Litze 8 hier als elektrische Leitung zwischen der Kohlenstoffbürste 3 und der Führungseinrichtung 6 fungiert. Die Ableitvorrichtung 1' befindet sich bei dieser Ausführungsform ebenfalls in einem Halteelement 7 der Maschine 100'. Hierbei befindet sich die Ableitvorrichtung 1' in einem Raum 18, welcher Teil einer Ölführung ist. Dadurch steht die Ableitvorrichtung 1' in ständigem Kontakt mit Öl. Somit ist es auch bei dieser Ausführungsform möglich, die thermische Belastung auf die einzelnen Teile, wie die Welle 2 und die Kohlenstoffbürste 3 gering zu halten. Auch hier wird die entstehende Wärme beim Ableitvorgang auf das Öl übertragen.

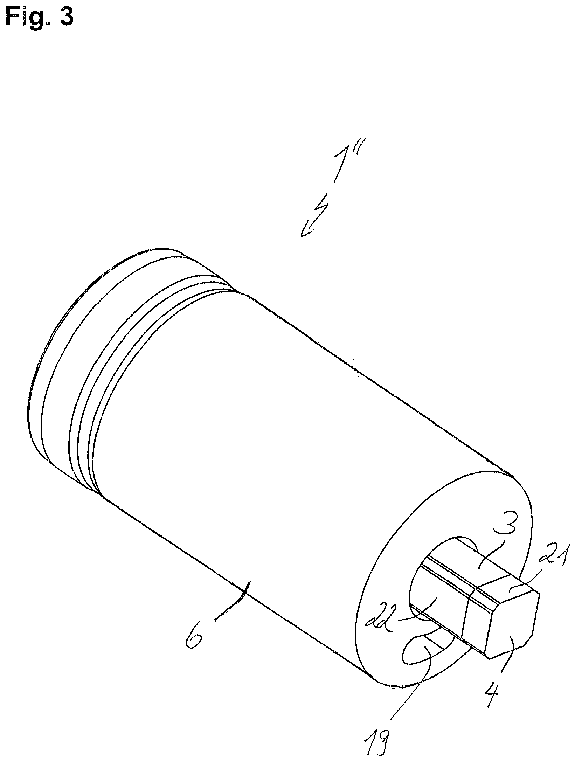

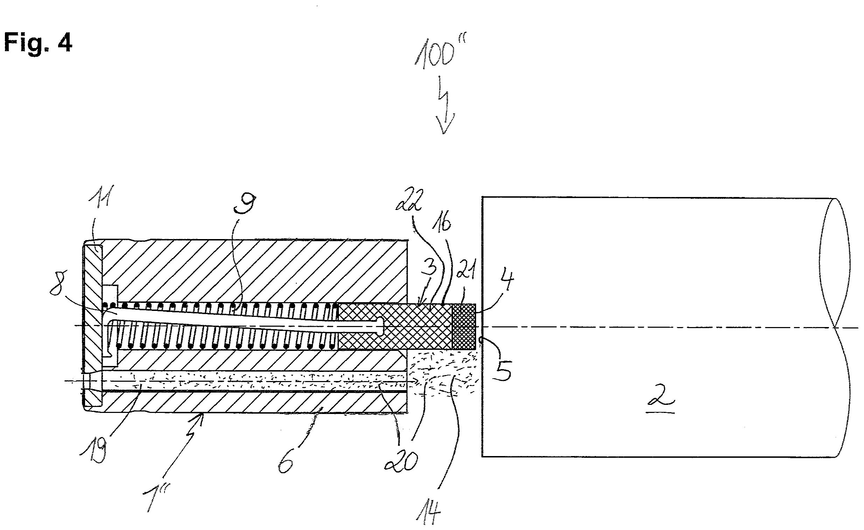

**Fig. 3** zeigt eine weitere Ausführungsform einer erfindungsgemäßen Ableitvorrichtung 1", wobei **Fig. 4** diese Ableitvorrichtung 1" in einer weiteren Ausführungsform einer erfindungsgemäßen Maschine 100" zeigt. Die Maschine 100" bzw. die Ableitvorrichtung 1" unterscheiden sich von den in den **Fig. 1** und **2** dargestellten Ausführungsformen insbesondere dadurch, dass in der Führungseinrichtung 6 eine Ölleitung 19 vorgesehen ist, welche sich vom Deckel 11 in axialer Richtung zum Raum 14 zwischen der Führungseinrichtung 6 und der Welle 2 erstreckt und in offener Verbindung mit diesem Raum 14 steht. Wie in **Fig. 4** zu erkennen ist, fließt Öl 20 vom Bereich des Deckels 11 in Richtung des Raumes 14 und ergießt sich in diesen. Dadurch wird der überbrückende Abschnitt 16 der Kohlenstoffbürste 3 von Öl umspült. In **Fig. 4** ist auch der zweischichtige Aufbau der Kohlenstoffbürste 3 gut zu erkennen. In einem vorderen Bereich 21 besteht die Kohlenstoffbürste aus einer Grafit-Silber-Mischung. In einem hinteren Bereich 22 besteht die Kohlenstoffbürste aus einer Grafit-Kupfer-Mischung. Die Litze 8 ist hier mit dem hinteren Bereich 22 der Kohlenstoffbürste 3 und der Führungseinrichtung 6 verbunden und verbindet diese Elemente elektrisch leitend.

## Patentansprüche

1. Elektrischer Antriebsmotor (100, 100', 100") oder Getriebe mit einem eine Welle (2) aufweisenden Rotorteil sowie einer Ableitvorrichtung (1, 1', 1") umfassend ein mindestens teilweise in einer Führungseinrichtung (6) aufgenommenes, verschiebbares Kontaktelement (3) zur Ausbildung eines elektrisch leitenden Schleifkontaktes zwischen einer zur Ausbildung des Schleifkontaktes vorgesehenen Schleifkontaktfläche (4) des Kontaktelements (3) und einer Wellenkontaktfläche (5) der Welle (2), wobei das Kontaktelement (3) mit der Führungseinrichtung (6) und/oder einem Halteelement (7) des elektrischen Antriebsmotors oder Getriebes elektrisch leitend verbunden ist und wobei das Kontaktelement (3) mittels eines Federelements (9) in Richtung der Wellenkontaktfläche (5) vorgespannt ist, wobei das Kontaktelement (3) mindestens teilweise mit einem ölartigen Fluid benetzt ist, wobei das Kontaktelement (3) der Ableitvorrichtung (1, 1', 1") zur Ausbildung eines Schleifkontaktes die Welle (2) mit seiner Schleifkontaktfläche (4) kontaktiert, wobei das Kontaktelement (3) eine Stirnfläche (10) der Welle 2 kontaktiert, wobei das Kontaktelement im Wesentlichen koaxial zur Welle angeordnet ist,
wobei das ölartige Fluid (20) zumindest in einem Raum (14) zwischen der Welle (2) und der Führungseinrichtung (6), welcher durch das Kontaktelement (3) überbrückt wird, vorgesehen ist, wobei die Ableitvorrichtung (1) mindestens teilweise in einer Fluidführung (13, 15) des ölartigen Fluids angeordnet ist, wobei das ölartige Fluid (20) zunächst in den Raum (14) zwischen der Welle (2) und der Führungseinrichtung (6) strömt und dann über die Welle (2) wieder abgeführt wird.

2. Elektrischer Antriebsmotor oder Getriebe nach Anspruch 1,
**dadurch gekennzeichnet,**
**dass** das ölartige Fluid Motoröl (20) und/oder Getriebeöl ist.

3. Elektrischer Antriebsmotor oder Getriebe nach einem der Ansprüche 1 oder 2,
**dadurch gekennzeichnet,**
**dass** die Führungseinrichtung (6) mit einem Statorteil der Maschine elektrisch leitend verbindbar ist.

4. Elektrischer Antriebsmotor oder Getriebe nach einem der vorhergehenden Ansprüche,
**dadurch gekennzeichnet,**
**dass** das Kontaktelement (3) mit der Führungseinrichtung (6) oder einem Halteelement (7) der Maschine (100) mittels einer, vorzugsweise niederohmigen Litze (8) elektrisch leitend verbunden ist, wobei die Litze (8) an einem Ende vorzugsweise in das Kontaktelement (3) eingepresst oder eingestampft ist und am anderen Ende mit der Führungseinrichtung (6) vorzugsweise verschweißt oder verlötet oder gecrimpt ist.

5. Elektrischer Antriebsmotor oder Getriebe nach einem der vorhergehenden Ansprüche,
**dadurch gekennzeichnet,**
**dass** die Führungseinrichtung (6) mindestens teilweise aus einem niederohmigen Material, insbesondere aus Metall, vorzugsweise Aluminium, Aluminiumlegierung, Kupfer und/oder Messing gefertigt ist.

6. Elektrischer Antriebsmotor oder Getriebe nach einem der vorhergehenden Ansprüche,
**dadurch gekennzeichnet,**
**dass** das Kontaktelement (3) im Wesentlichen aus einer Kohlenstoff-Metall-Mischung, insbesondere aus einer Mischung aus Grafit und Metall gefertigt ist, wobei der Gesamtvolumenanteil des Metalls vorzugsweise mindestens 30 Vol.-% beträgt, wobei zumindest in einem vorderen, die Schleifkontaktfläche (4) aufweisenden Bereich (16, 21) des Kontaktelements (3), vorzugsweise Silber als Metall vorgesehen ist und wobei in einem hinteren Bereich (22) des Kontaktelements (3) vorzugsweise Kupfer als Metall vorgesehen ist, wobei das Kontaktelement im Bereich der Schleifkontaktfläche vorzugsweise frei von Kupfer ist.

7. Elektrischer Antriebsmotor oder Getriebe nach einem der vorhergehenden Ansprüche,
**dadurch gekennzeichnet,**
**dass** das Kontaktelement (3) im Bereich der Schleifkontaktfläche (4) eine Ausnehmung, insbesondere eine Bohrung oder einen Schlitz aufweist und wobei das Kontaktelement im Bereich der Schleifkontaktfläche vorzugsweise offenporig ausgebildet ist.

8. Elektrischer Antriebsmotor oder Getriebe nach einem der vorhergehenden Ansprüche,
**dadurch gekennzeichnet,**
**dass** das Federelement eine Schraubendruckfeder (9) ist, welche mit einem Ende vorzugsweise an der der Schleifkontaktfläche (4) gegenüberliegenden Stirnseite des Kontaktelements (3) anliegt.

9. Elektrischer Antriebsmotor oder Getriebe nach einem der vorhergehenden Ansprüche,
**dadurch gekennzeichnet,**
**dass** in der Führungseinrichtung (6) eine Leitung (19) für das ölartige Fluid (20) vorgesehen ist, welche vorzugsweise in den Raum (14) zwischen der Welle (2) und der Führungseinrichtung (6) mündet.

10. Elektrischer Antriebsmotor oder Getriebe nach einem der vorhergehenden Ansprüche,
**dadurch gekennzeichnet,**
**dass** das Kontaktelement (3) durch das Federelement (9) stets mit einer Kraft von mindestens 10 N/cm² an die Welle (2) gedrückt wird.

11. Elektrischer Antriebsmotor oder Getriebe nach einem der vorhergehenden Ansprüche,
**dadurch gekennzeichnet,**
**dass** die Welle (2) zumindest in dem Bereich, in welchem diese vom Kontaktelement (3) kontaktiert wird, im Wesentlichen frei von Kupfer ist.

## Claims

1. An electric drive motor (100, 100',100") or a transmission having a rotor part which has a shaft (2) and having a discharge device (1, 1', 1") comprising a displaceable contact element (3), which is at least partly accommodated in a guide (6), for forming an electroconductive sliding contact between a sliding contact surface (4) of the contact element (3) and a shaft contact surface (5) of the shaft (2), the sliding contact surface (4) being provided for forming the sliding contact, the contact element (3) being electroconductively connected to the guide (6) and/or a retaining element (7) of the electric drive motor or transmission, and the contact element (3) being prestressed towards the shaft contact surface (5) by means of a spring element (9), the contact element (3) being at least partly wetted with an oily fluid, the contact element (3) of the discharge device (1, 1', 1") contacting the shaft (2) by means of its sliding contact surface (4) in order to form a sliding contact, the contact element (3) contacting an end surface (10) of the shaft 2, the contact element being disposed essentially coaxially to the shaft (2) wherein the oily fluid (20) is provided at least in a space (14) between the shaft (2) and the guide (6), the space (14) being bridged by the contact element (3), the discharge device (1) being disposed at least partly in a fluid guide (13, 15) of the oily fluid, the oily fluid (20) initially flowing into the space (14) between the shaft (2) and the guide (6) and subsequently being discharged again via the shaft (2).

2. The electric drive motor or the transmission according to claim 1, **characterized in that**
the oily fluid is motor oil (20) and/or gear oil.

3. The electric drive motor or the transmission according to any one of the claims 1 or 2,
**characterized in that**
the guide (6) can be electroconductively connected to a stator part of the machine.

4. The electric drive motor or the transmission according to any one of the preceding claims,
**characterized in that**
the contact element (3) is electroconductively connected to the guide (6) or a retaining element (7) of the machine (100) by means of a preferably low-resistance stranded wire (8), the stranded wire (8) preferably being pressed or stamped into the contact element (3) on one end and preferably welded or soldered or crimped to the guide (6) on the other end.

5. The electric drive motor or the transmission according to any one of the preceding claims,
**characterized in that**
the guide (6) is at least partly made of a low-resistance material, in particular metal, preferably aluminum, an aluminum alloy, copper and/or brass.

6. The electric drive motor or the transmission according to any one of the preceding claims,
**characterized in that**
the contact element (3) is essentially made of a carbon-metal mixture, in particular a mixture of graphite and metal, the total volume fraction of the metal preferably being at least 30 percent by volume, silver preferably being provided as the metal at least in a front area (16, 21) of the contact element (3), said front area (16, 21) having the sliding contact surface (4), and copper preferably being provided as the metal in a rearward area (22) of the contact element (3), the contact element preferably being free from copper in the area of the sliding contact surface.

7. The electric drive motor or the transmission according to any one of the preceding claims,
**characterized in that**
the contact element (3) has a recess, in particular a hole or a slit, in the area of the sliding contact surface (4), the contact element preferably being open-pored in the area of the sliding contact surface.

8. The electric drive motor or the transmission according to any one of the preceding claims,
**characterized in that**
the spring element is a helical compression spring (9) which preferably abuts on the end face of the contact element (3) opposite the sliding contact surface (4) with one end..

9. The electric drive motor or the transmission according to any one of the preceding claims,
**characterized in that**
a line (19) for the oily fluid (20), which preferably opens into the space (14) between the shaft (2) and the guide (6), is provided in the guide (6).

10. The electric drive motor or the transmission according to any one of the preceding claims,
**characterized in that**
the contact element (3) is constantly pressed on the shaft (2) with a force of at least 10 N/cm² by means of the spring element (9).

11. The electric drive motor or the transmission according to any one of the preceding claims,
**characterized in that**
the shaft (2) is essentially free from copper, at least in the area in which it is electrically connected with the contact element (3).

## Revendications

1. Moteur (100, 100',100") d'entraînement électrique ou transmission ayant une partie rotor qui a un arbre (2) et ayant un dispositif de décharge (1, 1', 1") comprenant un élément de contact (3) déplaçable, qui est au moins partiellement logé dans un moyen de guidage (6), pour former un contact à frottement électriquement conducteur entre une surface (4) de contact à frottement de l'élément de contact (3) et une surface (5) de contact d'arbre, ladite surface (4) de contact à frottement étant prévue pour former le contact à frottement, dans lequel l'élément de contact (3) est connecté électriquement conducteur au moyen de guidage (6) et/ou à un élément de retenue (7) du moteur d'entraînement électrique ou de la transmission et dans lequel l'élément de contact (3) est précontraint vers la surface (5) de contact d'arbre au moyen d'un élément de ressort (9), dans lequel l'élément de contact (3) est au moins partiellement mouillé d'un fluide huileux, dans lequel l'élément de contact (3) du dispositif de décharge (1, 1', 1") vient en contact avec l'arbre (2) au moyen de sa surface (4) de contact à frottement pour former un contact à frottement, dans lequel l'élément de contact (3) vient en contact avec une surface frontale (10) de l'arbre 2, dans lequel l'élément de contact est disposé essentiellement de manière coaxiale par rapport à l'arbre,
dans lequel le fluide huileux (20) est prévu au moins dans un espace (14) entre l'arbre (2) et le moyen de guidage (6), ledit espace (14) étant ponté par l'élément de contact (3), dans lequel le dispositif de décharge (1) est disposé au moins partiellement dans une conduite de fluide (13, 15) du fluide huileux, dans lequel le fluide huileux (20) d'abord s'écoule dans l'espace (14) entre l'arbre (2) et le moyen de guidage (6) et ensuite est évacué à nouveau via l'arbre (2).

2. Moteur d'entraînement électrique ou transmission selon la revendication 1,
**caractérisé en ce que**
le fluide huileux est une huile moteur (20) et/ou une huile pour engrenages.

3. Moteur d'entraînement électrique ou transmission selon l'une quelconque des revendications 1 ou 2,
**caractérisé en ce que**
le moyen de guidage (6) est capable d'être connecté électriquement conducteur à une partie stator de la machine.

4. Moteur d'entraînement électrique ou transmission selon l'une quelconque des revendications précédentes,
**caractérisé en ce que**
l'élément de contact (3) est connecté électriquement conducteur au moyen de guidage (6) ou à un élément de retenue (7) de la machine (100) au moyen d'un cordon (8), qui est de préférence à basse résistance, dans lequel le cordon (8) est, de préférence, pressé ou enfoncé dans l'élément de contact (3) d'une extrémité et soudé ou brasé ou serti avec le moyen de guidage (6) de l'autre extrémité.

5. Moteur d'entraînement électrique ou transmission selon l'une quelconque des revendications précédentes,
**caractérisé en ce que**
le moyen de guidage (6) est au moins partiellement fait d'un matériau à basse résistance, notamment de métal, de préférence d'aluminium, d'un alliage d'aluminium, de cuivre et/ou de laiton.

6. Moteur d'entraînement électrique ou transmission selon l'une quelconque des revendications précédentes,
**caractérisé en ce que**
l'élément de contact (3) est essentiellement fait d'un mélange de carbone et de métal, notamment d'un mélange de graphite et de métal, dans lequel une fraction volumique totale du métal est, de préférence, au moins 30 % en volume, dans lequel, de préférence, de l'argent est prévue comme métal au moins dans une zone avant (16, 21) qui a la surface (4) de contact à frottement et dans lequel, de préférence, du cuivre est prévu comme métal dans une zone arrière (22) de l'élément de contact (3), dans lequel l'élément de contact est, de préférence, libre de cuivre dans la zone de la surface de contact à frottement.

7. Moteur d'entraînement électrique ou transmission selon l'une quelconque des revendications précédentes,
**caractérisé en ce que**
l'élément de contact (3) a un évidement, notamment un trou ou une fente, dans la zone de la surface (4) de contact à frottement et dans lequel l'élément de contact est, de préférence, à pores ouverts dans la zone de la surface de contact à frottement.

8. Moteur d'entraînement électrique ou transmission selon l'une quelconque des revendications précédentes,
**caractérisé en ce que**
l'élément de ressort est un ressort (9) de compression hélicoïdal qui prend appui, de préférence, contre le côté frontal de l'élément de contact (3) opposé à la surface (4) de contact à frottement avec une extrémité.

9. Moteur d'entraînement électrique ou transmission selon l'une quelconque des revendications précédentes,
**caractérisé en ce**
**qu'**une conduite (19) pour le fluide huileux (20) est prévue dans le moyen de guidage (6), ladite conduite (19) débouchant, de préférence, dans l'espace (14) entre l'arbre (2) et le moyen de guidage (6).

10. Moteur d'entraînement électrique ou transmission selon l'une quelconque des revendications précédentes,
**caractérisé en ce que**
l'élément de contact (3) est pressé constamment sur l'arbre (2) avec une force d'au moins 10 N/cm² au moyen de l'élément de ressort (9).

11. Moteur d'entraînement électrique ou transmission selon l'une quelconque des revendications précédentes,
**caractérisé en ce que**
l'arbre (2) est essentiellement libre de cuivre au moins dans la zone dans laquelle l'arbre (2) vient en contact avec l'élément de contact (3).
